# EUROPÄISCHE PATENTSCHRIFT

(11) **EP 0 763 270 B1**
(45) Veröffentlichungstag und Bekanntmachung des Hinweises auf die Patenterteilung: **19.08.1998**
(21) Anmeldenummer: 95918537.2
(22) Anmeldetag: 16.05.1995
(51) Int. Cl.: H02B 11/127

(54) **SCHALTGERÄT MIT EINER EINRICHTUNG ZUM EINFAHREN IN EINE SCHALTZELLE**
SWITCHING DEVICE WITH A MECHANISM FOR INSERTION INTO A SWITCHGEAR CELL
SYSTEME DE COMMUTATION POURVU D'UN DISPOSITIF D'INTRODUCTION DANS UNE CELLULE DE REGULATION

(30) Priorität: 03.06.1994 DE 4420584
(43) Veröffentlichungstag der Anmeldung: 19.03.1997
(73) Patentinhaber: SIEMENS AKTIENGESELLSCHAFT, 80333 München (DE)
(72) Erfinder: MARQUARDT, Ulrich, D-13435 Berlin (DE); GODESA, Ludvik, D-10777 Berlin (DE)
(86) Internationale Anmeldenummer: DE9500674
(87) Internationale Veröffentlichungsnummer: WO9534114

(56) Entgegenhaltungen:
- DE-A- 4 211 421
- US-A- 4 939 622
- US-A- 5 097 382

## Beschreibung

Die Erfindung betrifft ein Schaltgerät mit einer Einrichtung zum Einfahren und Ausfahren relativ zu einem Einschubrahmen, wobei die Einrichtung
- eine an dem Schaltgerät drehbar gelagerte und an einem Bedienungspult des Schaltgerätes zugängliche Gewindespindel sowie eine verschiebbar geführte Wandermutter und ferner
- eine durch die Wandermutter zu betätigende, sich quer zur Fahrrichtung des Schaltgerätes erstreckende und an den Enden mit je einem Kurbelarm versehene Einfahrwelle umfaßt, die in Lagern der Einrichtung drehbar ist,
- die Kurbelarme mit Kurbelzapfen zum Eingreifen in ein Kulissenstück des Einschubrahmens versehen sind, und
- die Einrichtung einen mit dem Schaltgerät zu verbindenden Träger aufweist.

Ein Schaltgerät mit diesen Merkmalen ist durch die DE-A-4 211 421 und die US-A-5 097 382 bekannt geworden. Gemäß der US-A-5 097 382 wird der Träger der Einrichtung zum Ein- und Ausfahren an der Oberseite des Schaltgerätes querliegend montiert und mit beiden Seitenwänden des Schaltgerätes verbunden. Diese Bauweise ist insbesondere bei Niederspannungs-Leistungsschaltern nicht anwendbar, weil sich an der Oberseite solcher Leistungsschalter die Austrittsöffnungen der Lichtbogenlöschkammern befinden und diese nicht verdeckt werden dürfen. Gemäß der DE-A-4 211 421 besteht der Träger der Fahrvorrichtung aus zwei Lagerplatten, die durch Abstandsbolzen miteinander verbunden sind. Der Erfindung liegt hiervon ausgehend die Aufgabe zugrunde, eine zwar gleichfalls an dem Schaltgerät anzubringende Einrichtung zum Ein- und Ausfahren zu schaffen, die jedoch ohne störende Überdeckung wichtiger Baugruppen eines Leistungsschalters an diesem montierbar ist.

Diese Aufgabe wird gemäß der Erfindung dadurch gelöst, daß
- der Träger eine Grundplatte und daran abgestützte parallele Seitenwände aufweist, zwischen denen die Gewindespindel angeordnet und eine mit der Wandermutter gekuppelte Zahnstange geführt ist, die mit wenigstens einem auf der Einfahrwelle sitzenden Zahnrad in Eingriff steht,daß
- an dem Schaltgerät zusätzliche Lager für die Enden der Einfahrwelle angeordnet sind und daß
- der Träger an nur einer Verbindungsstelle mit dem Schaltgerät verbunden ist, die durch ein etwa rechtwinklig von der Grundplatte des Trägers abragendes und in einem Abstand von der Einfahrwelle angeordnetes Haltestück gebildet ist.

Durch die Erfindung wird erreicht, daß der Träger der Einrichtung nicht die gesamte Breite des Schaltgerätes zu überbrücken braucht und daher die Gefahr einer Überdeckung der Lichtbogenkammern nicht mehr besteht. Auch übernehmen die zusätzlichen Lager der Einfahrwelle die Abstützung der Einrichtung in der Nähe der Kurbelarme, d. h. dort, wo die Einfahrkräfte überwiegend wirken. Die verbleibende weitere Verbindungsstelle der Einrichtung mit dem Schaltgerät ist daher bei geeigneter Anordnung nur gering belastet und kann durch eine einzige Schraube gebildet sein.

Durch die weitere Gestaltung der Einrichtung ist dafür gesorgt, daß die Einrichtung insbesondere an der Unterseite eines Niederspannungs-Leistungsschalters, beispielsweise seitlich neben der Antriebsvorrichtung der Schaltkontakte, angeordnet und die Gewindespindel an dem Bedienungspult des Leistungsschalters bequem zugänglich ist. Dies wird durch die Ausführung des Trägers mit einer Grundplatte und daran abgestützten parallelen Seitenwänden erreicht, zwischen denen die Gewindespindel angeordnet und eine mit der Wandermutter gekuppelte Zahnstange geführt ist, die mit wenigstens einem auf der Einfahrwelle sitzenden Zahnrad in Eingriff steht. Die Abmessungen der Trägers sind auf diese Weise im wesentlichen auf die Abmessungen beschränkt, welche die kraftübertragenden Teile und ihre Führung erfordern. Eine solche Baugruppe ist verhältnismäßig schmal und daher an der Unterseite eines Leistungsschalters leicht unterzubringen.

Eine vorteilhaft einfache Bauform kann die zum Ein- und Ausfahren dienende Einrichtung dadurch erhalten, daß die Seitenwände des Trägers als Blechteile ausgebildet und mit dem Radius der Einfahrwelle angepaßten einseitig offenen Ausnehmungen versehen sind, die zur Bildung der Lager durch gleichfalls aus Blechteilen gebildete Lagerdeckel verschließbar sind.

Ferner kann ein die Gewindespindel gegen axiale Kräfte sicherndes Stützlager gleichfalls als Blechteil ausgebildet sein, das seitliche Zapfen zum Eingreifen in entsprechende fensterartige Öffnungen der Seitenwände besitzt. Je nach den aufzunehmenden Kräften kann das Stützlager aus einem solchen Blechteil oder zwei bzw. mehreren gleichen Blechteilen gebildet sein. Die angegebene Gestaltung erlaubt es, die Grundplatte, die Seitenwände und das Stützlager zusammensteckbar auszubilden und dann die durch die fensterartigen Öffnungen hindurchragenden Zapfen zu verstemmen bzw. zu vernieten.

Die Zahnstange kann durch einen in der Zahnteilung der Zahnräder gelochte Schiene mit einer Breite entsprechend dem Abstand der Seitenwände gebildet sein. Je nach Bedarf können mit dieser Zahnstange ein einzelnes, aus Blech bestehendes Zahnrad oder mehrere parallel zueinander auf der Einfahrwelle befestigte Zahnräder vorgesehen sein.

Ferner kann jede Seitenwand des Trägers eine fensterartige Öffnung zum Eingreifen eines Haltezapfens des Haltestückes besitzen und durch ein Übermaß der fensterartigen Öffnung kann das Haltestück relativ zu dem Träger schwenkbar sein. Auf diese Weise werden kleine Maßabweichungen überbrückt und eine von mechanischer Spannung freie Befestigung des Trägers ermöglicht.

Mit dem Betrieb der beschriebenen Einrichtung können Spreizkräfte verbunden sein, die bestrebt sind, die an der Grundplatte des Trägers angebrachten Seitenwände auseinanderzubiegen. Dies kann statt durch aufwendige Versteifungen dadurch vermieden werden, daß im Abstand der Seitenwände des Trägers angeordnete Wandteile des Schaltgerätes wenigstens die Ränder der Seitenwände erfassen und gegen Spreizkräfte abstützen. Auf diese Weise wird die aus anderen Gründen ohnehin erforderliche Festigkeit von Baugruppen des Schaltgerätes ausgenutzt, um die Einrichtung zum Ein- und Ausfahren zu vereinfachen.

Die Erfindung wird im folgenden anhand des in den Figuren dargestellten Ausführungsbeispieles näher erläutert.

Die Figur 1 zeigt schematisch eine Schaltzelle mit einem ausfahrbaren Schaltgerät und einer Einrichtung zum Einfahren und Ausfahren des Schaltgerätes.

Die Figuren 2, 3 und 4 zeigen eine Einrichtung zum Einfahren und Ausfahren eines Schaltgerätes in drei rechtwinklig zueinander stehenden Ansichten, teilweise mit angrenzenden Bauteilen eines Schaltgerätes.

In der Figur 5 ist eine Einzelheit der Lagerung einer Einfahrwelle dargestellt.

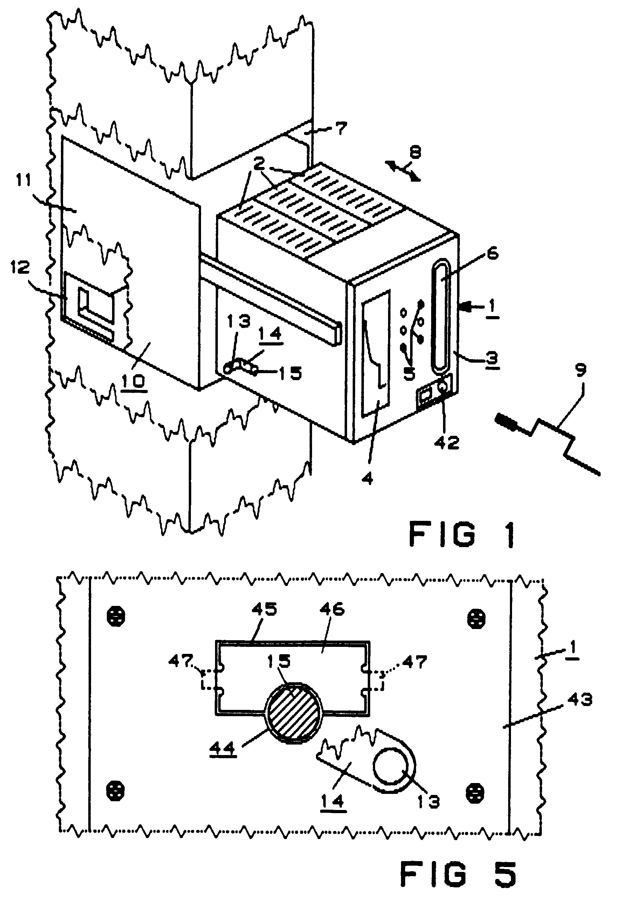

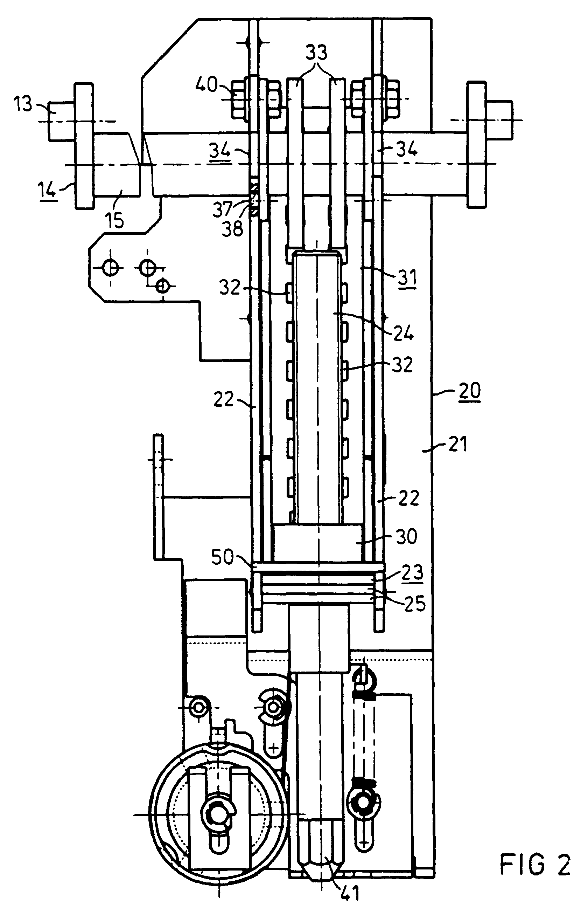

Das in der Figur 1 gezeigte Schaltgerät 1 ist ein Niederspannungs-Leistungsschalter mit obenliegenden Lichtbogenlöschkammern 2 und einem frontseitigen Bedienungspult 3. Dieses weist an der linken Seite ein Bedienungsfeld eines elektronischen Überstromauslösers 4, in der Mitte Bedienungselemente und Anzeigeelemente 5 zum Ein- und Ausschalten sowie an der rechten Seite einen Handhebel 6 zum Spannen eines Energiespeichers auf. Eine Schaltzelle 7 ist Bestandteil eines Schaltschrankes oder einer mehrfeldrigen Schaltanlage und enthält einen Einschubrahmen 10, der zur Aufnahme des Schaltgerätes 1 geeignete Führungsmittel besitzt. Eine linke Seitenwand 11 des Einschubrahmens 10 ist aufgebrochen gezeigt, um ein Kulissenstück 12 sichtbar zu machen, welches mit einem Kurbelzapfen 13 eines Kurbelarmes 14 des Schaltgerätes 1 zusammenwirkt. Die gleiche Anordnung ist sinngemäß an der gegenüberliegenden, in der Figur 1 nicht sichtbaren Seiten des Schaltgerätes 1 vorgesehen. Ein Doppelpfeil 8 bezeichnet die Richtung der Bewegung des Schaltgerätes 1 beim Ein- und Ausfahren. Die Betätigung einer die Kurbelarme 14 tragenden Einfahrwelle 15 mittels eines Werkzeuges 9 wird im folgenden anhand der Figuren 2, 3 und 4 näher erläutert.

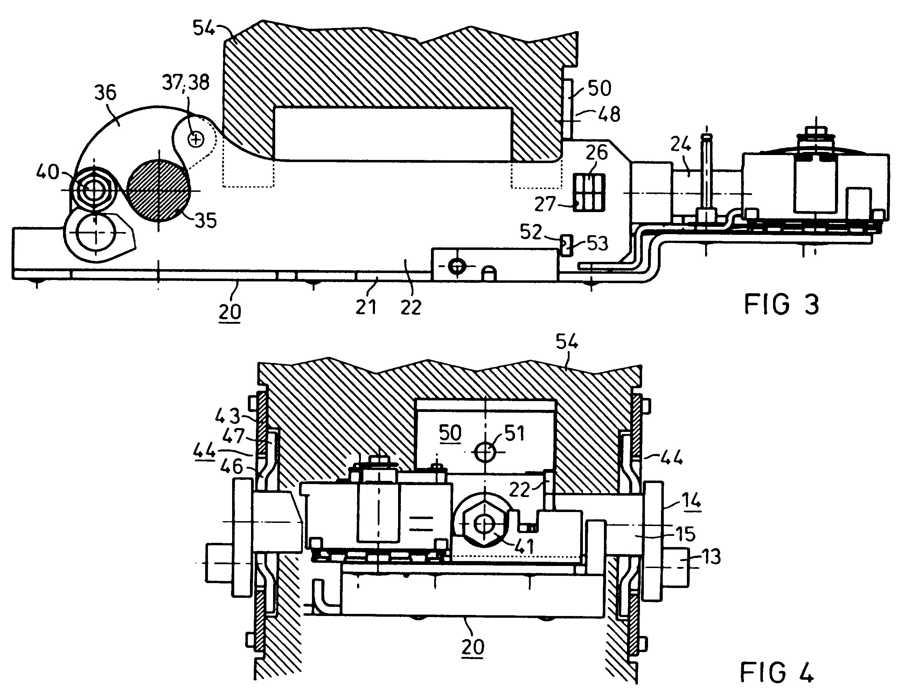

Die Einrichtung zum Einfahren und Ausfahren weist einen Träger 20 auf, der aus mehreren zusammengefügten Blechteilen besteht. Auf einer Grundplatte 21 sind parallel zueinander zwei ebene Seitenwände 22 angeordnet, mit denen ein Stützlager 23 für eine Gewindespindel 24 verbunden ist. Das Stützlager 23 besteht in dem gezeigten Beispiel aus drei aufeinanderliegenden gleichen ebenen Lagerstücken 25 aus Blech, die mit seitlichen Zapfen 26 in eine fensterartige Öffnung 27 in den Seitenwänden 22 hineinragen (Figur 3). In der gleichen Weise sind die Seitenwände 22 mit der Grundplatte 21 verbunden.

Mit einer auf der Gewindespindel 24 sitzenden Wandermutter 30 ist eine gleichfalls aus Blech bestehende Zahnstange 31 verbunden, die zwischen den Seitenwänden 22 und auf der Grundplatte 21 aufliegend geführt ist. Die Zahnstange 31 besitzt zwei parallele Reihen von Öffnungen 32, die in einem Abstand entsprechend der Teilung der Zähne zweier Zahnräder 33 angeordnet sind, die gleichfalls aus Blech bestehen und mit der Einfahrwelle 15 in geeigneter Weise verbunden sind. Diese Anordnung bildet zugleich eine axiale Führung der Einfahrwelle 15. Die Zahnstange 31 ist eine U-förmige Schiene aus Blech, in deren Bodenteil sich die Öffnungen 32 befinden und dessen Schenkel an den Seitenwänden 22 geführt sind. Wie insbesondere der Figur 3 zu entnehmen ist, ist die Einfahrwelle 15 in Lagern 34 gelagert, die jeweils aus einer randseitig offenen Ausnehmung 35 der Seitenwände 22 und einem die Ausnehmung abdeckenden Lagerdeckel 36 gebildet sind. Die Lagerdeckel 36 übergreifen an einem Ende jeweils mit einer Öffnung 37 einen passenden Zapfen 38 in der zugehörigen Seitenwand 22 und sind auf der gegenüberliegenden Seite durch eine Schraube 40 gesichert. Diese Anordnung ermöglicht einen besonders einfachen Einbau der Einfahrwelle 15 mit bereits montierten Kurbelarmen 14 und Zahnrädern 33. Die feststehenden Teile der Einrichtung, d. h. Grundplatte 21, Seitenwände 22, Stützlager 23 und ein Haltestück 50 sind zweckmäßig zusammensteckbar und können dann durch Vernieten oder Verstemmen von Steckzapfen verbunden werden.

Die Gewindespindel 24 ist zur Betätigung mittels einer Handkurbel mit einem Kopfstück 41 versehen, das in den gezeigten Beispiel ein Sechskantprofil mit kegelförmigem Ende aufweist. Das Kopfstück 41 ist durch eine in der Figur 1 gezeigte Öffnung 42 im Bedienungspult 3 des Schaltgerätes 1 zugänglich.

Zur Verbindung des Trägers mit dem Schaltgerät 1 sind in Lagerplatten 43 des Schaltgerätes 1 zusätzliche Lager 44 angeordnet, deren Aufbau näher aus den Figuren 4 und 5 hervorgeht. Die Lager 44 bestehen ähnlich wie die Lager 34 aus einer der Einfahrwelle 15 angepaßten einseitig offenen Ausnehmung 45 in den Lagerplatten 43 und einem diese verschließenden Lagerdeckel 46 (Figuren 4, 5). Der Lagerdeckel 46 besitzt zur Sicherung in axialer Richtung Haltefahnen 47 und überträgt radiale Lagerkräfte direkt über seine Umfangskanten auf die Lagerplatte 43. Auf diese Weise ist die Einfahrwelle 15 nahe ihren mit den Kurbel armen 14 versehenen Enden an dem Schaltgerät 1 abgestützt. Eine weitere Verbindungsstelle 48 des Trägers 20 mit dem Schaltgerät 1 besteht nur im Bereich des Stützlagers 23 und wird durch ein gleichfalls zwischen den Seitenwänden 22 angeordnetes Haltestück 50 gebildet, das mit einer Öffnung 51 für ein Befestigungselement versehen ist. Die beiden zusätzlichen Lager 44 bilden zusammen mit dem Haltestück 50 eine sog. Dreipunktbefestigung des Trägers 20, die einfach herstellbar und unempfindlich gegen Maßtoleranzen ist. Da sich das Haltestück 50 in einem gewissen Abstand von der Einfahrwelle 15 befindet, ist die aufzubringende Haltekraft und daher die Beanspruchung des Befestigungselementes gering. Zur Befestigung des Haltestückes 50 an dem Träger 20 sind die Seitenwände 22 mit je einer fensterartigen Öffnung 52 zum Eingreifen eines Haltezapfens 53 des Haltestückes 50 versehen. Durch ein gewisses Übermaß der Öffnungen 52 und deren Lage nahe der Grundplatte 21 wird dafür gesorgt, daß das Haltestück 50 in gewissen Grenzen schwenkbar ist und dadurch spannungsfrei zur Anlage an einer Gegenfläche des Schaltgerätes 1 gebracht werden kann.

Die mittels der Gewindespindel 24 auszuübende Kraft beim Ein - und Ausfahren des Schaltgerätes 1 führt zum Entstehen einer Spreizkraft, die bestrebt ist, die Seitenwände 22 auseinanderzubiegen. Dies würde die Funktion der Lager 34 und des Stützlagers 23 beeinträchtigen. In dem gezeigten Ausführungsbeispiel werden Spreizkräfte dieser Art durch Wandteile 54 aufgenommen. Wie man insbesondere in den Figuren 3 und 4 erkennt, erfassen die Wandteile 54 die Ränder der Seitenwände 22 nahe dem Stützlager 23 und den Lagern 34 der Einfahrwelle 15. Die Wandteile 54 sind Bestandteil von Polkörpern des Schaltgerätes 1 (Figur 1), die aus Gründen der mechanischen Beanspruchung beim Schalten ohnehin eine hohe Beständigkeit gegen Verformung aufweisen.

## Patentansprüche

1. Schaltgerät (1) mit einer Einrichtung zum Einfahren und Ausfahren relativ zu einem Einschubrahmen (10), wobei die Einrichtung
- eine an dem Schaltgerät (1) drehbar gelagerte und an einem Bedienungspult (3) des Schaltgerätes zugängliche Gewindespindel (24) sowie eine verschiebbar geführte Wandermutter (30) und ferner
- eine durch die Wandermutter (30) zu betätigende, sich quer zur Fahrrichtung (8) des Schaltgerätes (1) erstreckende und an den Enden mit je einem Kurbelarm (14) versehene Einfahrwelle (15) umfaßt, die in Lagern (34) der Einrichtung drehbar ist,
- die Kurbelarme (14) mit Kurbelzapfen (13) zum Eingreifen in ein Kulissenstück (12) des Einschubrahmens (10) versehen sind, und
- die Einrichtung einen mit dem Schaltgerät (1) zu verbindenden Träger (20) aufweist,
**dadurch gekennzeichnet,** daß
- der Träger (20) eine Grundplatte (21) und daran abgestützte parallele Seitenwände (22) aufweist, zwischen denen die Gewindespindel (24) angeordnet und eine mit der Wandermutter (30) gekuppelte Zahnstange (31) geführt ist, die mit wenigstens einem auf der Einfahrwelle (15) sitzenden Zahnrad (33) in Eingriff steht, daß
- an dem Schaltgerät (1) zusätzliche Lager (44) für die Enden der Einfahrwelle (15) angeordnet sind und daß
- der Träger (20) an nur einer Verbindungsstelle (48) mit dem Schaltgerät (1) verbunden ist, die durch ein etwa rechtwinklig von der Grundplatte (21) des Trägers (20) abragendes und in einem Abstand von der Einfahrwelle (15) angeordnetes Haltestück (50) gebildet ist.

2. Schaltgerät nach Anspruch 1,
**dadurch gekennzeichnet,** daß die Seitenwände (22) des Trägers (20) als Blechteile ausgebildet und mit dem Radius der Einfahrwelle (15) angepaßten einseitig offenen Ausnehmungen (35) versehen sind, die zur Bildung der Lager (34) durch gleichfalls aus Blechteilen gebildete Lagerdeckel (36) verschließbar sind.

3. Schaltgerät nach Anspruch 2,
**dadurch gekennzeichnet,** daß ein die Gewindespindel (24) gegen axiale Kräfte sicherndes Stützlager (23) gleichfalls als Blechteil ausgebildet ist, das seitliche Zapfen (26) zum Eingreifen in entsprechende fensterartige Öffnungen (27) der Seitenwände (22) besitzt.

4. Schaltgerät nach Anspruch 3,
**dadurch gekennzeichnet,** daß das Stützlager (23) aus mehreren gleichen Blechteilen (25) zusammengesetzt und die fensterartigen Öffnungen (27) der Seitenwände (22) entsprechend bemessen sind.

5. Schaltgerät nach einem der vorangehenden Ansprüche,
**dadurch gekennzeichnet,** daß die Zahnstange (31) durch einen in der Teilung der Zähne des Zahnrades (33) gelochten Schiene mit einer dem Abstand der Seitenwände (22) entsprechenden Breite gebildet ist und daß das Zahnrad (33) gleichfalls aus Blech besteht.

6. Schaltgerät nach Anspruch 1,
**dadurch gekennzeichnet,** daß jede Seitenwand (22) nahe der Grundplatte (21) eine fensterartige Öffnung (52) zum Eingreifen eines Haltezapfens (53) des Haltestückes (50) besitzt und daß durch ein Übermaß der Öffnungen (52) das Haltestück (50) relativ zu dem Träger (20) schwenkbar ist.

7. Schaltgerät nach einem der vorangehenden Ansprüche,
**dadurch gekennzeichnet,** daß im Abstand der Seitenwände (22) des Trägers (20) angeordnete Wandteile (54) des Schaltgerätes (1) wenigstens die Ränder der Seitenwände (22) erfassen und gegen Spreizkräfte abstützen.

## Claims

1. Switching device (1) with an apparatus for retraction and extension relative to a slide-in frame (10), said apparatus comprising
- a threaded spindle (24) that is supported on the switching device (1) so as to be capable of rotation and is accessible at an operating console (3) of the switching device and also a travelling nut (30) that is guided so as to be capable of displacement and furthermore
- a retraction shaft (15) to be actuated by the travelling nut (30), said retraction shaft extending at right angles to the direction of travel (8) of the switching device (1), being provided at each of its ends with a crank arm (14) and being rotatable in bearings (34) pertaining to the apparatus,
- the crank arms (14) are provided with crank pins (13) for engaging a linking piece (12) of the slide-in frame (10), and
- the apparatus has a carrier (20) to be connected to the switching device (1),
characterised in that
- the carrier (20) comprises a base plate (21) and parallel side walls (22) supported thereon, between which the threaded spindle (24) is arranged and a toothed rack (31) coupled to the travelling nut (30) is guided, said toothed rack being in engagement with at least one toothed wheel (33) situated on the retraction shaft (15), in that
- additional bearings (44) for the ends of the retraction shaft (15) are arranged on the switching device (1) and in that
- the carrier (20) is connected to the switching device (1) at only one point of connection (48) which is formed by a holding piece (50) that projects away from the base plate (21) of the carrier (20) approximately at right angles and is spaced from the retraction shaft (15).

2. Switching device according to Claim 1,
characterised in that the side walls (22) of the carrier (20) take the form of sheet-metal parts and are provided with recesses (35) that are open on one side, adapted to the radius of the retraction shaft (15) and, for the purpose of forming the bearings (34), capable of being closed by bearing caps (36) that are likewise formed from sheet-metal parts.

3. Switching device according to Claim 2,
characterised in that a support bearing (23) securing the threaded spindle (24) against axial forces likewise takes the form of a sheet-metal part that has lateral pins (26) for engaging corresponding window-type apertures (27) in the side walls (22).

4. Switching device according to Claim 3,
characterised in that support bearing (23) is composed of several similar sheet-metal parts (25) and the window-type apertures (27) in the side walls (22) are dimensioned accordingly.

5. Switching device according to one of the preceding claims,
characterised in that the toothed rack (31) is formed by a rail that is perforated in the spacing of the teeth of the toothed wheel (33) having a width corresponding to the spacing of the side walls (22) and in that the toothed wheel (33) is likewise made of sheet metal.

6. Switching device according to Claim 1,
characterised in that each side wall (22) has, near the base plate (21), a window-type aperture (52) for engaging a holding pin (53) of the holding piece (50) and in that by virtue of an excessive size of the apertures (52) the holding piece (50) is capable of pivoting relative to the carrier (20).

7. Switching device according to one of the preceding claims,
characterised in that wall parts (54) of the switching device (1) spaced from the side walls (22) of the carrier (20) extend at least to the edges of the side walls (22) and support them against splaying forces.

## Revendications

1. Appareil de commutation (1) pourvu d'un dispositif d'introduction dans un bâti et d'extraction hors de celui-ci (10), le dispositif
- comprenant une broche filetée (24) montée tournante sur l'appareil de commutation (1) et accessible au niveau d'un panneau de commande (3) de l'appareil de commutation ainsi qu'un écrou mobile (30) guidé avec possibilité de translation et en outre
- un arbre de connexion (15) qui est actionné par l'écrou mobile (30), s'étend transversalement à la direction de déplacement (8) de l'appareil de commutation (1) et est pourvu à chacune des extrémités d'un bras de manivelle (14), lequel arbre peut tourner dans des paliers (34) du dispositif,
- les bras de manivelle (14) étant pourvus de manetons (13) destinés à s'engager dans une coulisse (12) du bâti (30), et
- le dispositif comprenant un support (20) à relier à l'appareil de commutation (1),
caractérisé en ce que
- le support (20) comporte une plaque de base (21) et des parois latérales (22) parallèles supportées sur celle-ci et entre lesquelles la broche filetée (24) est montée et une crémaillère (31) couplée avec l'écrou mobile (30) est guidée, laquelle crémaillère engrène avec au moins une roue dentée (33) placée sur l'arbre de connexion (15), que
- des paliers (44) supplémentaires sont disposés sur l'appareil de commutation (1) pour les extrémités de l'arbre de connexion (15) et que
- le support (20) est relié à l'appareil de commutation (1) uniquement en un point (48) qui est formé par une pièce de maintien (50) qui fait saillie sensiblement à angle droit de la plaque de base (21) du support (20) et qui est disposée à distance de l'arbre de connexion (15).

2. Appareil de commutation selon la revendication 1,
caractérisé en ce que les parois latérales (22) du support (20) sont réalisées sous forme de pièces en tôle et sont pourvues d'évidements (35) ouverts d'un côté et adaptés au rayon de l'arbre de connexion (15), lesquels évidements peuvent, pour former les paliers (34), être fermés par des chapeaux de palier (36) également formés de pièces en tôle.

3. Appareil de commutation selon la revendication 2,
caractérisé en ce qu'un palier d'appui (23) bloquant la broche filetée (24) soumise à des forces axiales peut également être réalisé sous la forme d'une pièce en tôle qui possède des embouts (26) latéraux destinés à s'engager dans des trous (27) appropriés en forme de fenêtre ménagés dans les parois latérales (22).

4. Appareil de commutation selon la revendication 3,
caractérisé en ce que le palier d'appui (23) est formé de plusieurs pièces en tôle (25) identiques et les trous (27) en forme de fenêtre des parois latérales (22) sont dimensionnés en conséquence.

5. Appareil de commutation selon l'une des revendications précédentes,
caractérisé en ce que la crémaillère (31) est formée par une barre perforée suivant le pas des dents de la roue dentée (33) et dont la largeur correspond à l'écartement des parois latérales (22) et que la roue dentée (33) est également en tôle.

6. Appareil de commutation selon la revendication 1,
caractérisé en ce que chaque paroi latérale (22) possède à proximité de la plaque de base (21) un trou (52) en forme de fenêtre dans lequel peut s'engager un embout de maintien (53) de la pièce de maintien (50) et qu'un surdimensionnement des trous (52) permet à la pièce de maintien (50) de pivoter par rapport au support (20).

7. Appareil de commutation selon l'une des revendications précédentes,
caractérisé en ce que des parties de paroi (54) de l'appareil de commutation, (1) disposées à distance des parois latérales (22) du support (20), maintiennent au moins les bords des parois latérales (22) et empêchent celles-ci de s'écarter.
